Europäisches Patentamt

European Patent Office

Office européen des brevets

(11) Veröffentlichungsnummer : **0 101 844**
**B1**

# (12) EUROPÄISCHE PATENTSCHRIFT

(45) Veröffentlichungstag der Patentschrift :
28.05.86

(51) Int. Cl.⁴ : **A 01 F 29/06**

(21) Anmeldenummer : **83106685.7**

(22) Anmeldetag : **07.07.83**

(54) Häckselanordnung für Häckselmaschinen.

(30) Priorität : **20.08.82 DE 3231018**

(43) Veröffentlichungstag der Anmeldung :
**07.03.84 Patentblatt 84/10**

(45) Bekanntmachung des Hinweises auf die Patenterteilung : **28.05.86 Patentblatt 86/22**

(84) Benannte Vertragsstaaten :
**AT BE CH FR GB LI NL**

(56) Entgegenhaltungen :
**DE-C-    89 530**
**DE-C-    694 736**

(73) Patentinhaber : **Klöckner-Humboldt-Deutz AG Zweigniederlassung Fahr**
**D-7702 Gottmadingen (DE)**

(72) Erfinder : **Pürrer, Josef**
**Roseneggstrasse 36**
**D-7702 Gottmadingen (DE)**

(74) Vertreter : **Haft, Berngruber, Czybulka**
**Hans-Sachs-Strasse 5**
**D-8000 München 5 (DE)**

EP 0 101 844 B1

## Beschreibung

Die vorliegende Erfindung betrifft eine Häckselanordnung für Häckselmaschinen, insbesondere Feldhäcksler nach dem Oberbegriff des Anspruchs 1.

Beim Häckseln von z. B. Mais für Silagezwecke besteht die Gefahr, daß die Maiskolben oder Kolbenstücke, die sich in dem zur Häckselvorrichtung strömenden Futterpaket befinden, nicht in ausreichendem Maße zerkleinert werden. Die auf der Gegenschneide anliegenden Kolbenstücke werden nämlich vom Schneidmesser zwar angeschlagen, können dabei aber hinter dem Schneidmesser in das Innere der Häckseltrommel geschleudert werden. Großstückiges Häckselgut ist jedoch für die Silage unerwünscht.

Um das Eindringen von größeren Kolbenstücken in das Innere der Häckseltrommel zu vermeiden, wurde bereits vorgeschlagen, zwi- schen den Schneidmessern Abdeckbleche anzu- ordnen, die mit der Häckseltrommel verbunden sind und innerhalb des Umlaufkreises der Schneidkanten der Schneidmesser liegen. Derartige Abdeckbleche werden mit Schrauben an der Häckseltrommel befestigt, wobei die Schraubenköpfe am Außenumfang der Häckseltrommel liegen.

Um auch zu verhindern, daß das Futterpaket, nachdem es durchgeschnitten ist, unmittelbar hinter der Schneidkante in Richtung auf die Häckseltrommel zu bewegt wird, wobei sich die Geschwindigkeit des Futterpaketes in Richtung der Häckseltrommel kurzzeitig um ein Vielfaches über die Vorschubgeschwindigkeit erhöht, so daß wiederum eine unerwünscht große Schnittlänge des Häckselgutes entsteht, wurde bereits vorge- schlagen (DE-A-28 06 311), daß sich die Ab- deckungen unmittelbar an die Schneidkante der Schneidmesser anschließen und in Verlängerung der Schneidkante entgegen der Umlaufrichtung der Häckseltrommel verlaufen.

Damit wird zwar eine gute und gleichmäßige Schnittlänge des Häckselgutes erzielt, da sich unmittelbar an die Schneidkante anschließende Abdeckungen als Führungsfläche für das ungeschnittene Futterpaket dienen, jedoch ist diese Anordnung noch aufwendig.

Aus der DE-B-12 31 948 ist ferner ein Schneidgehäuse für Halm- und sonstiges Viehfuttengut bekannt, die eine Häckseltrommel aufweist, welche mit Platten versehen ist, an denen etwa gleichmäßig auf ihrem Umfang verteilt Lagereisen angeschraubt sind, die als Träger einer Mehrzahl von Schneidmessern dienen. Die Lagereisen sind jeweils mit mehreren Bolzen und Schrauben an die mit der Trommelwelle verbundenen Platten angeschraubt, während die Schneidmesser mit einer eigenen Schraubverbindung an den Lagereisen angeschraubt sind.

Beim Zusammenbau der Häckselanordnung während der Fertigung oder bei späteren Reparaturen, wenn beispielsweise ein Messer abgebrochen ist und durch ein neues ersetzt werden soll, sind umfangreiche Schraub- und Justierarbeiten vorzunehmen. Dies ist besonders dann nachteilig, wenn z. B. durch längeren Gebrauch die die Schraubbolzen der oben genannten Lagereisen aufnehmenden Öffnungen der mit der Trommelwelle verbundenen Platten gemäß der DE-B-12 31 948 mehr Toleranz aufweisen als zulässig ist, so daß die Schneidmesser nicht mehr paßgenau mit der Schneidkante an ihrer Flugbahn anliegen.

Aus der DE-C-694 736 ist eine Häckselmaschine bekannt, bei der die Messer auf der Messer- trommel mittels Befestigungs- und Stellschrau- ben zum Gegenmesser einstellbar derart angeordnet sind, daß die Messer auf Paßstücken mit kugeliger Wölbung befestigt sind und wobei diese Paßstücke in entsprechenden kugeligen Aussparungen der Trommelscheiben verstellbar sind. Hierbei ist es noch erforderlich, für das Nachstellen des Messers ein Spiel des Paßstückes durch konische Ausführung der Bohrung für die Befestigungsschraube vorzusehen. Ferner muß das Paßstück mit einem etwa senkrecht zur Messerkipplinie angeordneten seitlichen Zapfen versehen sein, gegen den die Stellschraube drückt, um das Messer in der einmal eingerichteten Lage zu halten.

Aus der DE-C-89 530 ist ferner eine Dreschmaschine bekannt, die mit Schlagleisten versehen ist, deren Querschnitt sowohl kreuzförmig als auch quadratisch oder rechteckig gewählt sein kann. An den Längsseiten der Leisten sind Aus- sparungen vorgesehen, welche mit Ausspa- rungen der Trommelscheibe übereinstimmen, in die entsprechende Teile, d. h. Rundstäbe oder Vierkantstäbe unter Kraftaufwand eingesetzt werden müssen, um Schwächungen der Schlagleisten durch Bolzenlöcher zu vermeiden und die Schlagleisten in der Trommel zu verkeilen.

Aufgabe der vorliegenden Erfindung ist es, eine Häckselanordnung der eingangs näher genannten Art so auszugestalten, daß der Zusammenbau der Häckseltrommel mit den Häckselmessern sowie das Auswechseln eines Häckselmessers während des Betriebes erleichtert und beschleunigt wird.

Ausgehend von einer Häckselanorndung der eingangs näher genannten Art wird zur Lösung dieser Aufgabe vorgeschlagen, daß die Ausschnitte der Trommelrosette trapezförmig sind mit nach innen zulaufenden Wänden und daß die Messerhalter Sechskantform aufweisen, so daß mindestens die beiden Auflageflächen des Messerhalters beim Einsetzen in die Ausschnitte an deren nach innen zulaufenden Wänden anliegen, wobei die Messerhalter eine annähernd senkrecht zu dem Messer verlaufende Wurffläche sowie eine tangential zum Trommelhüllkreis liegende Führungsfläche aufweisen.

Durch die Ausgestaltung wird der Vorteil erzielt, daß nach Abnehmen des Messerhalters aus der Trommelrosette dieses jederzeit wieder paßgenau in den Ausschnitt eingesetzt werden kann, so daß keine umständliche Justierung des Messerhalters bezüglich der Trommelrosette erforderlich ist.

Der Messerhalter selbst kann einstückig mit einem Schlitz zur Aufnahme des Messers ausgebildet sein oder auch aus zwei Teilen zusammengesetzt sein, wobei zwischen ihnen ein Schlitz frei bleibt ; ferner ist eine Bohrung zur Aufnahme eines Schraubbolzens vorgesehen.

Vorzugsweise ist dasjenige im Messerhalter befindliche Ende des Messers mit einem Längsschlitz versehen, der vom Schraubbolzen durchsetzt wird.

Mit der erfindungsgemäßen Ausgestaltung von Messer, Messerhalter und Trommelrosette ist es möglich, zur Verbindung des Messers und des Messerhalters mit der Trommelrosette nur einen einzigen Schraubbolzen pro Rosette zu verwenden. Da die Messer über den Messerhalter an zwei parallel zueinander angeordneten Trommelrosetten befestigt sind, werden also insgesamt nur zwei Schraubbolzen benötigt. Sowohl der Herstellungsaufwand bei der Fertigung der erfindungsgemäßen Häckselanordnung als auch der Reparaturaufwand beim Auswechseln eines gebrochenen oder beschädigten Messers wird damit auf ein Minimum reduziert.

Im folgenden wird die Erfindung anhand der Zeichnung näher erläutert, in der ein vorteilhaftes Ausführungsbeispiel dargestellt ist. Es zeigen :

Figur 1 eine Draufsicht auf eine Trommelrosette mit erfindungsgemäßen Messerhaltern ;

Figur 2 eine Seitenansicht der Häckseltrommel ;

Figur 3 eine vergrößerte Ansicht eines Messerhalters und

Figur 4 eine Seitenansicht der erfindungsgemäß angeordneten Messer.

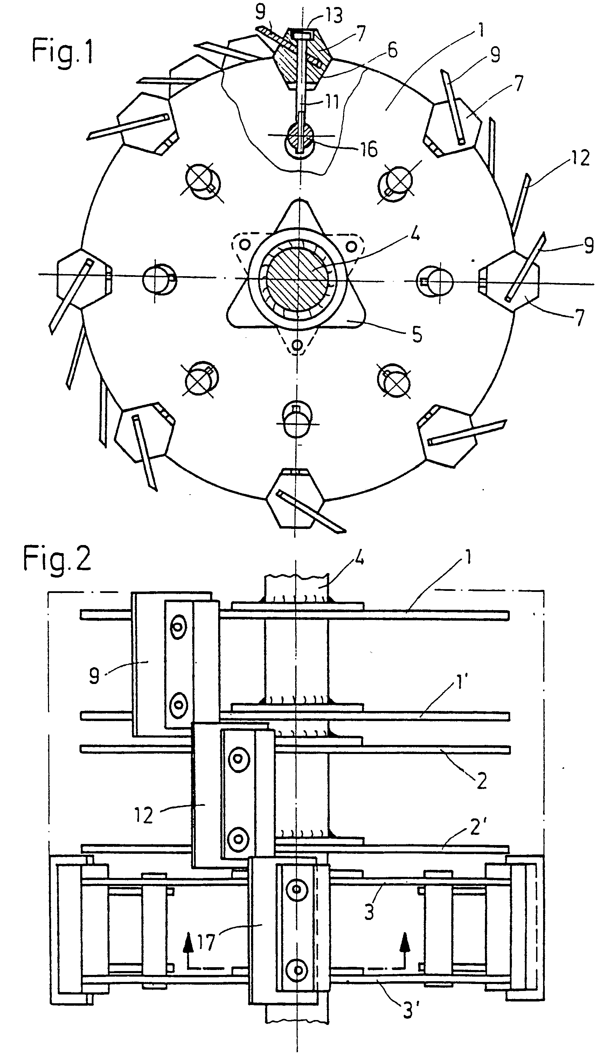

Bei der in Figur 1 dargestellten Draufsicht auf die Häckselanordnung ist mit 1 eine Trommelrosette bezeichnet, die über eine Flanschanordnung 5 an der Trommelwelle 4 befestigt ist und sich mit dieser dreht. Die Trommelrosette 1 weist an ihrem Umfang eine Anzahl von gleichmäßig verteilten Aussparungen 6 auf, die z. B. konisch zur Trommelwelle 4 hin zulaufen und die Form eines abgeschnittenen Sechskants aufweisen, d. h. trapezförmig sind.

Figur 2 zeigt eine Seitenansicht der Häckselanordnung, wobei eine Anzahl von Messerreihen 9, 12, 17 in verschiedenen Ebenen und versetzt zueinander angeordnet sind und jeweils an zwei Trommelrosetten 1, 1' bzw. 2, 2' und 3, 3' befestigt sind. Das Futterpaket wird über eine nicht dargestellte Zufuhreinrichtung der Häckseltrommel zugeführt und durch die nebeneinanderliegenden Häckselmesser in kleine Stücke geschnitten, die für die Silage geeignet sind.

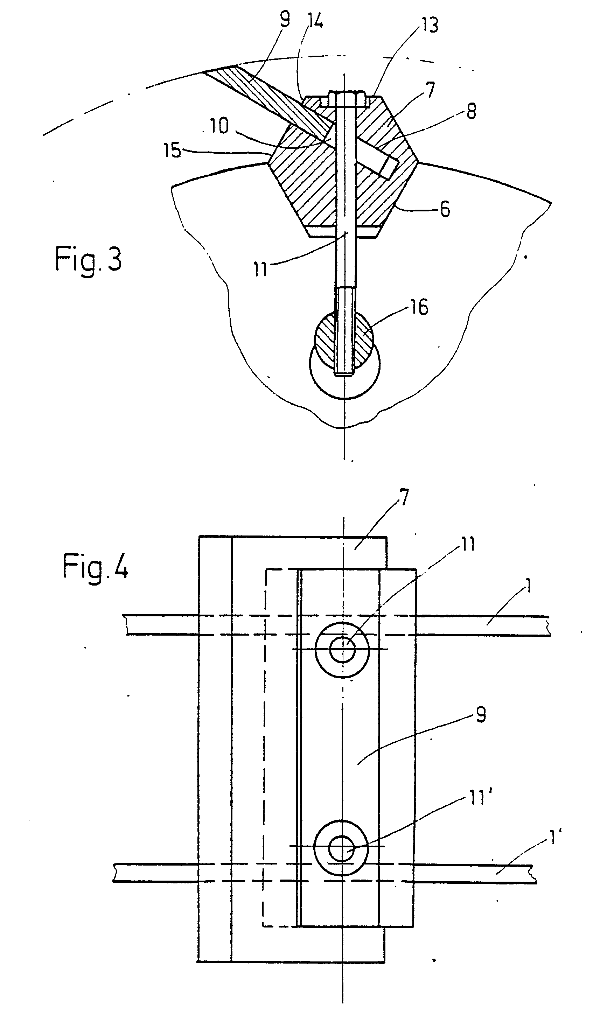

Figur 3 zeigt eine vergrößerte Draufsicht auf einen Teil der Trommelrosette mit einem in den Ausschnitt 6 der Rosette 1 eingesetzten Messerhalter 7. Dieser Messerhalter weist z. B.

Form eines Sechskants auf und ist genau an die Aussparung 6 angepaßt, so daß der Messerhalter 7 ohne Justierung in die Trommelrosette 1 eingesetzt werden kann. Der Messerhalter 7 ist ferner mit einem geeignet angeordneten Schlitz 8 versehen, in dem das Schneidmesser 9 eingeklemmt wird. Das Schneidmesser 9 ist in demjenigen Bereich, der in den Messerhalter 7 eingreift, mit einem Längsschlitz 10 versehen, so daß seine Stellung relativ zum Messerhalter 7 verändert werden kann. Die Anordnung von Messerhalter 7 und Messer 9 wird durch einen Schraubbolzen 11 gehalten, der eine im Messerhalter 7 vorgesehene Bohrung durchsetzt und in einen Stopfen 16 mit Innengewinde eingreift. Durch einfaches Anziehen des Schraubbolzens 11 wird sowohl der Messerhalter 7 als auch das Messer 9 im Messerhalter festgeklemmt.

Mit 13 ist eine in geringem Abstand vom Trommelhüllkreis angeordnete tangentiale Führungsfläche bezeichnet. Mit 14 ist eine Stoßfläche bezeichnet, die zum Ablenken von Fremdkörpern bei eingefahrenem Messer dient. Mit 15 ist ferner eine Wurffläche für den Auswurf bezeichnet, die im wesentlichen senkrecht zur Kante des Schneidmessers 9 angeordnet ist und sich bis zur tangentialen Führungsfläche 13 erstreckt.

Figur 4 läßt erkennen, daß der erfindungsgemäß ausgestaltete Messerhalter 7 an den beiden zugehörige Trommelrosetten 1, 1' sowie das zugehörigen Schneidmesser 9 mit nur zwei Schraubbolzen 11, 11' befestigt sind. Dadurch ist eine besonders einfache, schnelle und kostensparende Herstellung der Häckselanordnung sowie ein schnelles Auswechseln eines Messers 9 gewährleistet.

Die Form des Messerhalters kann auch anders als sechskantförmig sein, wobei dann die Ausschnitte der Trommelrosette eine daran angepaßte Form aufweisen.

Es ist ferner auch möglich, den Messerhalter aus zwei Teilen herzustellen, deren jedes dann mit einer Aussparung versehen ist, so daß nach dem Zusammensetzen zum fertigen Messerhalter ein Schlitz zur Aufnahme des Messers entsteht.

**Patentansprüche**

1. Häckselanordnung für Häckselmaschinen, insbesondere Feldhäcksler, mit einer Häckseltrommel, die an ihrem Umfang mehrere im Abstand voneinander angeordnete, mit einer feststehenden Gegenschneide zusammenwirkende Schneidmesser aufweist, die an mindestens einer rotierenden Trommelrosette (1) über Messerhalter (7) befestigt sind, wobei die Trommelrosette (1) an ihrem äußeren Umfang mit einer der Messerzahl entsprechenden Anzahl von Ausschnitten (6) versehen ist und die Messerhalter (7) eine an diese Ausschnitte (6) angepaßte Form aufweisen und in die Ausschnitte (6) einsetzbar sind, dadurch gekennzeichnet, daß die Ausschnitte (6) der Trommelrosette (1) trapezförmig sind mit nach innen zulaufenden Wänden und daß die Messerhalter (7) Sechskantform aufweisen, so daß mindestens die beiden Auflageflächen des Messerhalters beim Einsetzen in die Ausschnitte (6) an deren nach innen zulaufenden Wänden anliegen, wobei die Messerhalter (7) eine annähernd senkrecht zu dem Messer verlaufende Wurffläche sowie eine tangential zum Trommelhüllkreis liegende Führungsfläche aufweisen.

2. Häckselanordnung nach Anspruch 1, dadurch gekennzeichnet, daß der Messerhalter (7) einstückig ist und einen Schlitz (8) zur Aufnahme des Messers (9) aufweist.

3. Häckselanordnung nach Anspruch 1, dadurch gekennzeichnet, daß der Messerhalter (7) aus zwei Teilen derart zusammengesetzt ist, daß zwischen Ihnen ein Schlitz (8) zur Aufnahme der Messer frei bleibt.

4. Häckselanordnung nach Ansprüchen 1 bis 3, dadurch gekennzeichnet, daß der Messerhalter (7) eine weitere Bohrung aufweist zur Aufnahme eines Schraubbolzens (11).

5. Häckselanordnung nach einem der Ansprüche 1 bis 4, dadurch gekennzeichnet, daß die Messer (9, 12, 17) einen Längsschlitz (10) aufweisen, der vom Schraubbolzen (11) durchsetzt ist.

## Claims

1. A chopping device for chopping machines, in particular for forage harvesters, comprising a chopping cylinder the circumference of which is provided with a plurality of spaced-apart cutting blades cooperating with a stationary shear plate and secured to at least one rotating cylinder rosette (1) via blade holders (7), the cylinder rosette (1) having on its outer circumference a number of cut-out portions (6) corresponding to the number of blades and the blade holders (7) having a shape which is adapted to said cut-out portions (6) and being adapted to be inserted into said cut-out portions (6), characterized in that the cut-out portions (6) of the cylinder rosette (1) have a trapezoidal shape with inwardly tapering walls and that the blade holders (7) have a hexagonal shape so that, when the blade holder is inserted into the cut-out portion (6), at least the two support surfaces of the blade holder abut on the inwardly tapering walls of said cut-out portion (6), said blade holders (7) being provided with a delivery surface, which extends approximately at right angles to the blade, and with a guide surface, which extends tangentially to the enveloping circle of the cylinder.

2. A chopping device according to claim 1, characterized in that the blade holder (7) is a one-piece blade holder and is provided with a slot (8) for receiving therein the blade (9).

3. A chopping device according to claim 1, characterized in that the blade holder (7) consists of two parts, which are combined in such a way that a slot (8) for receiving therein the blade is defined between said two parts.

4. A chopping device according to claims 1 to 3, characterized in that the blade holder (7) is provided with an additional bore for receiving therein a screw bolt (11).

5. A chopping device according to one of the claims 1 to 4, characterized in that the blades (9, 12, 17) are provided with a longitudinal slot (10) through which the screw bolt (11) extends.

## Revendications

1. Dispositif de hachage pour machine à hacher, en particulier pour ramasseuse-hacheuse, comportant un tambour hacheur qui présente sur sa périphérie une pluralité de lames de couteaux espacées les unes des autres et coopérant avec une contre-lame fixe, les lames de couteaux étant fixées, par l'intermédiaire de porte-couteaux (7), sur au moins un flasque (1) de tambour rotatif, le flasque (1) de tambour étant pourvu, à sa périphérie extérieure, d'une pluralité de découpes (6) correspondant au nombre de couteaux et les porte-couteaux (7) présentant une forme adaptée à ces découpes (6) pour pouvoir être insérés dans lesdites découpes (6), caractérisé en ce que les découpes (6) du flasque (1) de tambour sont de forme trapézoïdale, avec des parois dirigées vers l'intérieur, et en ce que les porte-couteaux (7) présentent une forme hexagonale, de sorte qu'au moins les deux faces d'appui des porte-couteaux portent sur les parois dirigées vers l'intérieur des découpes (6), lorsqu'ils sont insérés dans lesdites découpes, les porte-couteaux (7) présentant en outre une forme saillante sensiblement perpendiculaire au couteau ainsi qu'une face de guidage tangentielle au cercle enveloppe du tambour.

2. Dispositif de hachage selon la revendication 1, caractérisé en ce que le porte-couteau (7) est d'une seule pièce et présente une fente (8) pour la réception du couteau (9).

3. Dispositif de hachage selon la revendication 1, caractérisé en ce que le porte-couteau (7) est constitué de deux parties assemblées de façon à laisser subsister entre elles une fente (8) pour la réception du couteau.

4. Dispositif de hachage selon les revendications 1 à 3, caractérisé en ce que le porte-couteau (7) présente un autre alésage pour la réception d'un boulon (11).

5. Dispositif de hachage selon l'une des revendications 1 à 4, caractérisé en ce que les couteaux (9, 12, 17) présentent une gorge longitudinale (10) traversée par le boulon (11).

0 101 844

Fig.1

Fig.2

Fig.3

Fig.4